# EUROPEAN PATENT APPLICATION

(11) **EP 3 113 109 A1**
(43) Date of publication of application: **04.01.2017**
(21) Application number: 15306040.5
(22) Date of filing: 30.06.2015
(51) Int. Cl.: G06T 7/00

(54) **DEVICES AND METHODS FOR LOCALIZATION OF MULTIPLE DEVICES**

(71) Applicant: Thomson Licensing, 92130 Issy-les-Moulineaux (FR)
(72) Inventor: HUMBERT, Frédérique, 35576 Cesson-Sévigné (FR); JEGOU, Karine, 35576 Cesson-Sévigné (FR); LE ROUX, Mikel, 35576 Cesson-Sévigné (FR); HENAFF, Jérôme, 78140 Versailles (FR)
(74) Representative: Huchet, Anne

(57) **Abstract**

The disclosure is about seamless localization of multiple devices, by matching overlaps between images captured by the devices. A first device (201) sends a request (300) to other devices (211, 221, 231) and receives the images captured by their cameras (311, 312, 313). Overlaps between images are detected and corresponding positions of the devices are computed (330) from these overlaps. Finally, the positions are sent back (350) to the devices. The orientation towards a magnetic north can be used to rotate the captured images and metadata related to image and devices can be used to scale the captured images, thus allowing to use simpler image processing algorithms. Methods and devices are claimed.

## Description

### TECHNICAL FIELD

The present invention relates generally to computer systems and in particular to in-room localization of handheld mobile devices to be used within a cooperative application requiring the knowledge of the physical relative position of other devices. Multi-player multi-device mobile games are a typical application for the invention.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Mobile devices and wireless communications became ubiquitous in the recent years and the number of applications available in such context are huge. Some applications allow to create a multi-user multi-device environment, allowing devices to interact and exchange data. Multi-player games are a typical example of such an environment. Although most games use continuous network access to allow online gaming in different locations, other games try to benefit from the co-location, in a single location, of the devices and the player to increase the user experience.

A typical setup for such applications is to use a tablet as central device, lying on a table and acting as a common screen with which each participant interacts through his smartphone, also positioned on the table. A first example of application is a poker game bet handling application where the mobile devices would be used to handle the stakes, the bets, the dealer, etc. Using mobile devices for that purpose allows to perform statistics and analytics on the games and the players, in real time. The players still use real physical cards but are not bothered by the handling of chips. Another interesting application is a photo sharing application where every participant is able to "send" a picture from his device to another device by "sliding" the picture towards the target device.

Some of these applications need to geo-localize the mobile devices in order to allow them to interact. In the example of the poker application, it is necessary to get the physical position of the mobile devices, or at least their relative position, to determine the order of the players. A major issue regarding this point is that the geo-localization techniques traditionally used for outdoor positioning of mobile devices are either not working indoors (e.g.: GPS) or not accurate enough (e.g. WiFi).

This issue has been partly addressed by conventional solutions. In "3D interaction environment for free view point TV and games using multiple tablet computers", Dupré proposes a system based on the inertial measurement unit that is integrated in modern mobile devices to deduce the relative position of mobile devices within a room. However this technique requires a calibration phase where the user positions the device at an initial location to initialize the system before being able to use it. Some manual manipulation of the devices is therefore required before being able to obtain the position. Furthermore, the overall precision depends on the precision of the operator and may be subject to approximation since all devices do not necessarily have the same size which complicates the manual initialization. The publication entitled "Stitching pen gestures that span multiple devices" also proposes a solution to this issue. In this proposal, the relative position between devices is deduced from a trace made by one user spanning over multiple devices. This system requires also a manual calibration phase before being able to obtain the positions. The paper entitled "Augmented Surfaces: A Spatially Continuous Workspace for Hybrid Computing Environments" proposes a system using external camera detecting markers on the devices to be geo-localized and thus determining their positions. However the setup is quite complex since a top mounted camera is needed and the environment can be disturbing for the users. It can therefore be appreciated that there is a need for a solution that allows for in-room localization of devices and that addresses at least some of the problems of the conventional solutions. The present invention provides such a solution.

### SUMMARY

In a first aspect, the disclosure is directed to a method for localization of a set of second devices, comprising at a processor of a first device, receiving at least a captured image from each of the second devices, detecting overlapping areas between the captured images received from the devices, determining using detected overlapping areas geometrical transformations between the captured images, determining using determined geometrical transformations the corresponding positions of the second devices and sending to at least one of the second devices its position. A variant embodiment further comprises receiving from the second devices their orientation towards a magnetic north direction.

In a second aspect, the disclosure is directed to a method for participating in localization of a set of devices, comprising at a processor of a device to be located, obtaining a measure of the orientation of the device towards a magnetic north direction, capturing an image of a scene facing a screen, sending to the first device the captured image, metadata related to at least one of the device and the image and orientation of the device towards a magnetic north direction. A variant embodiment of both first and second aspect further comprises rotating the captured image according to the device orientation towards a magnetic north direction so that the columns of pixels of the captured image correspond to the south-north direction with the first pixel of the column located towards the north.

Various embodiment of first and second aspect comprise:
- receiving from the second devices metadata related to at least one of the device and the image,
- scaling the captured image so that the pixel dimensions correspond to a determined size.

In a third aspect, the disclosure is directed to a data processing device for localization of a set of second devices, comprising an interface configured to receive at least the captured image from the second devices and send to the second devices their localization positions; a processor configured to send a localization request to at least a second device, receive at least the captured image from the second devices, detect overlapping areas between the captured images received from the devices determine, using detected overlapping areas, geometrical transformations between the captured images, determine, using determined geometrical transformations, the corresponding positions of the second devices, and send to the second devices their localization positions. A variant embodiment further comprises receiving from the second devices their orientation towards a magnetic north direction. A variant embodiment further comprises receiving from the second devices metadata related to at least one of the device and the image.

In a fourth aspect, the disclosure is directed to a data processing device for participating in the localization of a set of devices, comprising a camera positioned on the same side as the screen and configured to capture an image of the scene facing the screen, a magnetometer configured to measure the orientation towards a magnetic north direction, a screen configured to display application data to the user, an interface configured to send the captured image to the first device and a processor configured to receive a localization request from a first device, capture an image of the scene facing the screen through the integrated camera and send the captured image to the first device.

Various embodiment of third and fourth aspect comprise:
- rotating the captured image according to its orientation towards a magnetic north direction so that the columns of pixels of the captured image correspond to the south-north direction with the first pixel of the column located towards the north;
- scaling the captured image according to metadata related to at least one of the device and the image so that the pixel dimensions of captured images for the second devices are similar;
- scaling the captured image so that the pixel dimensions correspond to a determined size.

In a fifth aspect, the disclosure is directed to a computer program comprising program code instructions executable by a processor (110) for implementing the steps of a method according to at least one of claims 1 to 5.

In a sixth aspect, the disclosure is directed to a computer program product which is stored on a non-transitory computer readable medium (190) and comprises program code instructions executable by a processor (110) for implementing the steps of a method according to at least one of claims 1 to 5.

### BRIEF DESCRIPTION OF DRAWINGS

Preferred features of the present disclosure will now be described, by way of non-limiting example, with reference to the accompanying drawings, in which:
Figure 1 illustrates an exemplary system in which the disclosure may be implemented;
Figure 2A shows an example of usage of at least an embodiment of the disclosure, consisting in a poker game bet management application;
Figure 2B shows another example of usage of at least an embodiment of the disclosure, consisting in a photo sharing application;
Figure 3A illustrates an example of configuration of the devices in the room participating in the localization process;
Figure 3B illustrates an exemplary method of in-room multi-device localization according to a preferred embodiment of the present disclosure;
Figure 4A illustrates an example of overlapping captured images;
Figure 4B illustrates the set of transformation between matching elements of the images;
Figure 4C shows the result of the complete registration process highlighting the localizations detected for the center of the captured images;
Figure 5A shows an example of multi-device arrangement highlighting the angles of each device between the north direction and the vertical up direction from the center of each device;
Figure 5B shows the images 400 and 420 respectively captured by the devices 201 and 221;
Figure 5C illustrates the result of the rotation performed on the captured images to facilitate the matching;
Figure 6 is a flowchart describing the behavior of a slave device participating in the in-room localization process; and
Figure 7 is a flowchart describing the behavior of the master device orchestrating the in-room localization process.

### DESCRIPTION OF EMBODIMENTS

The disclosure is about seamless localization of multiple devices, by matching overlaps between images captured by the devices. A first device sends a request to the other devices and receives the images captured by their cameras. Overlaps between images are detected and corresponding positions of the devices are computed from these overlaps. Finally, the positions are sent back to the devices.

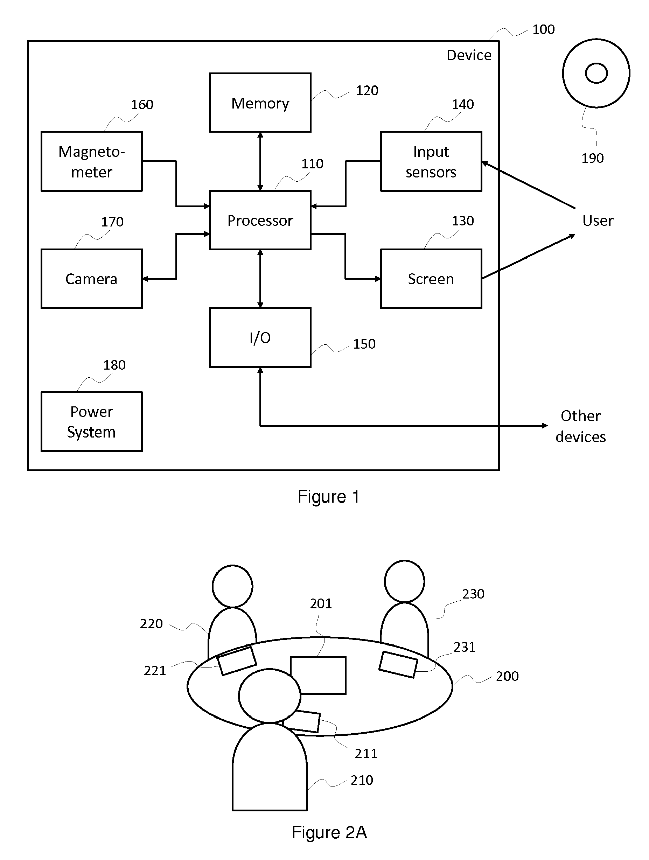

Figure 1 illustrates an exemplary device in which the disclosure may be implemented. The device 100 preferably comprises at least one hardware processor 110 configured to execute the method of at least one embodiment of the present disclosure, memory 120, a screen 130 configured to display images to the user, input sensors 140 configured to handle the interactions of the user with the device, a I/O interface 150 configured to interact with other devices, a magnetometer 160 configured to measure the magnetic field, more precisely the orientation of the device towards the north magnetic pole, and a camera 170 positioned on the screen side and configured to capture an image of the elements facing the screen. A power system 180 supplies power to the device. A computer readable storage medium 190 stores computer readable program code that is executable by the processor 110 to perform the method described herein. Conventional communication interfaces using WiFi or GSM protocols constitute examples of I/O interface 150. Many other such input and output interfaces may be used, consistent with the spirit of the invention. These interfaces provide support for higher level protocols such as various Internet protocols in order to allow the device 100 to exchange data and interact with other devices. The skilled person will appreciate that the illustrated device is very simplified for reasons of clarity.

Figure 2A shows an example of usage of at least an embodiment of the disclosure. It illustrates an example of setup for a multi-player multi-device application related to a poker game. Three participants 210, 220, 230 are sitting around the table 200, each of them having in front of him his device, respectively 211, 221, 231 (such as the device 100 introduced in figure 1) and an additional device 201 (such as the device 100 introduced in figure 1), shared by the users. The devices are laid on the table, screens and cameras pointing upwards so that the screen is visible by the user and the camera is able to record the elements over the table, for example the ceiling of the room. In a typical example, devices 211, 221 and 231 are smartphones while the device 201 is a tablet. All the devices are interconnected through a WiFi network, allowing any of these devices to interact with the others. On the device 201, a poker bet handling application is launched. The users launch a companion application to handle their chip stack. The device 201 shows all common elements, for example the amount of current bets of all the players, while the devices 211, 221 and 231 show the individual elements, for example to indicate which participant has to bet, which one is the dealer and also allow the participant to bet when appropriate. This is enabled through the knowledge of the relative physical positions of the devices.

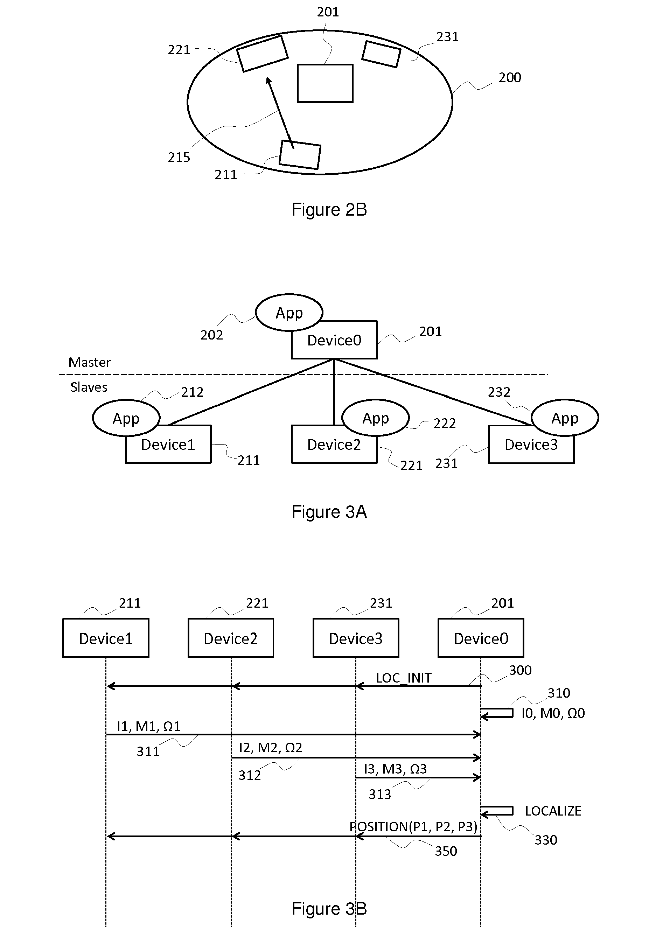

Another usage is a photo sharing application where a user sends an image from his device to another device simply by swiping the image on his device in the direction of the target device. This is illustrated in the figure 2B. The picture displayed on device 211 is swiped, in step 215, towards device 221. This causes the transfer of the corresponding file from device 211 to device 221 using any file transfer protocol such as ftp or http.

Figure 3A illustrates an example of configuration of the devices in the room participating in the localization process, to be achieved prior to the interactions shown in figure 3B. Prior to this phase, the devices discovered one another and one of the devices was elected to be the master (the central device on which most of the calculations are performed). The other devices are so-called slaves. The result of this phase is illustrated in Figure 3A where the device elected as master is the common device 201 introduced in Figure 2. Indeed, it has the biggest screen and is intended to display common information. This device will serve as the reference for the localization. This discovery and election phases are out of scope of the invention since many conventional mechanisms could be used for that purpose. However, the preferred method for the discovery and election is to perform it directly within the application, for example the photo sharing application illustrated in figure 2B. For example, the application 202 is first launched on the common device 201. After sending out a determined discovery message, e.g. "Who's there?", on a determined multicast IP address, e.g. 232.0.0.0, and receive no answer in a determined period of time, i.e. one second, the device 201 decides it is the master and waits for connections from the other participating devices by listening to the multicast IP address. A second device 211 wanting to participate will also launch the same photo sharing application 212, which results in sending out the discovery message. In response, it will receive a welcome message from the master, i.e. "The Master!", thereby establishing a connection to the first device 201. When the device 211 receives the answer it automatically configures as a slave device. The process is iterated with the two other devices, respectively 221 and 231 launching the application, respectively 222 and 232, and being configured also as slaves. Slave and master devices are based on device 100 described in figure 1.

Other techniques could be used such as the UPnP service discovery or the Internet Session Announcement Protocol described in RFC2974. Another technique for discovery includes a cloud-based server to connect all participating devices under a unique "room" number. The election part is not mandatory since each device could perform the computation, however such implementation would not be efficient in terms of processing power inadequately spent. Once every participating device has joined, fixing the list of the participating devices, the localization process described in figure 3B can be started.

Figure 3B illustrates an exemplary method of multi-device localization according to a preferred embodiment of the present disclosure. The master device Device0 initiates, in step 300, a LOC_INIT request. This request is sent to all the slave devices, for example using a multicast IP address, and triggers measurements on all devices. Each device, respectively 201, 211, 221, 231 measures its orientation angle towards the North pole using the integrated magnetometer, respectively Ω0, Ω1, Ω2, Ω3 and captures an image using the camera, respectively 10, I1, I2, I3 with the associated image and device metadata, respectively M0, M1, M2, M3. The metadata advantageously corresponds to the EXIF (Exchangeable image file format, as defined by the Japan Electronic Industries Development Association) data commonly associated with images captured by cameras. These metadata comprise data related to the captured image such as the image size, the exposure, the date of capture, but also data related to the device such as the model, the sensor size, the focal length of the lens or even, in some cases, the distance focused subject. This information can be used by image processing algorithms to improve quality and speed up calculations. Each slave device then sends this information to the master device, respectively in steps 310, 311, 312 and 313, without control on the order of reception. In step 330, the different images are analyzed in order to detect overlaps. From the overlaps, the positions of the participant devices is computed, taking the position of the master device as reference. The position of the devices, respectively P1, P2 and P3, is then sent back to the devices, in step 350. According to the needs of the application, this transmission may either include only the position of the received device, for example providing P2 to Device2, or, preferably, the positions of all devices, i.e. Device2 receives P1, P2, P3. P0 does not need to be sent since it serves as reference and therefore corresponds to the origin point whose coordinates are 0,0.

In step 330, state of the art feature based registration algorithms are used to find areas of the images that are matching, indicating an overlap of the capture areas. This overlap characterizes the relative position of the associated capture devices. Various algorithms can be used for this purpose. The preferred embodiment is based on feature based registration. This technique consists in the following steps. First the images are analyzed to detect interest points, or so-called local features. The analysis is not done at the pixel level but on image descriptors such as the well-known scale-invariant feature transform (SIFT) descriptors. Once all local features have been extracted for all the images, a feature matching algorithm allows to compare them efficiently and identify the matches between images. Then a geometric registration on the matched area determines the transformation between the images, comprising translation, scaling and rotation values, thereby allowing to position one capture image in relation to the other.

Preferably, the LOC_INIT request 300 can be triggered by any participating device when it detects that it has been moved, using its inertial measurement unit. This launches again the whole process and allows to localize continuously the devices, even in the case where at least one of them is moving. Preferably, the participating devices propose a mechanism allowing to perform a LOC_INIT request 300, such as a button in the user interface of the application or a vocal command.

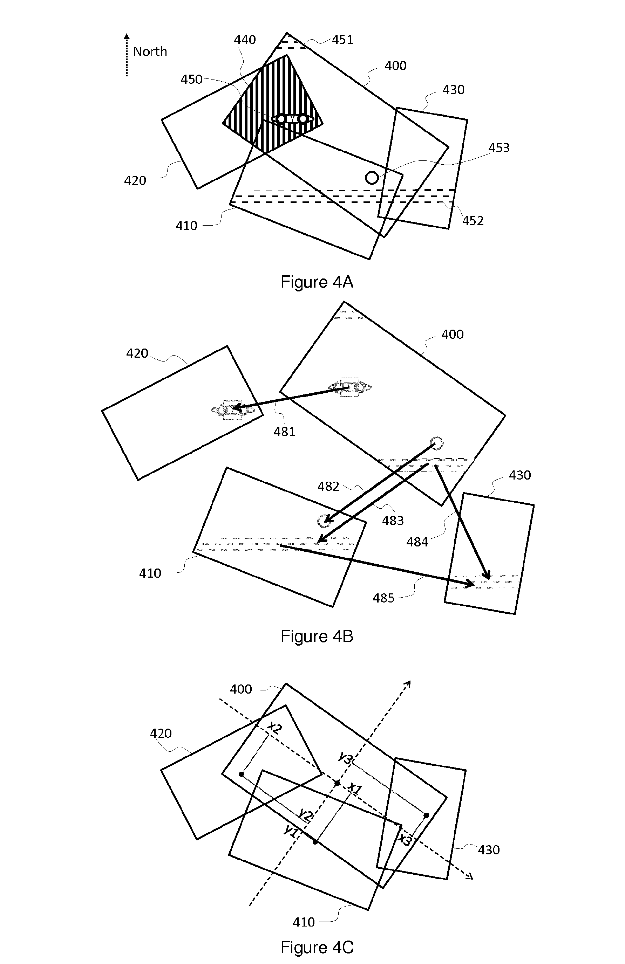

Figure 4A illustrates an example of representation of overlapping captured images. The rectangles 400, 410, 420 and 430 represent images that have been captured respectively by devices 201, 211, 221 and 231, with different position and capture parameters. These images capture the ceiling of the room, over the table (200 in Figure 2). The capture includes four distinctive elements: a ceiling-mounted lighting equipment 450, two structural wooden beams 451 and 452 and a fire detector 453. The registration algorithm of step 330 of figure 3, makes use of these distinctive elements to perform the localization of the devices. In this example, the area 440 is the overlap between images 400 and 420. It includes the distinctive element 450 that serves for the matching algorithm. More precisely, interest points related to this distinctive element are detected in both images. In the registration algorithm, the interest points of both images are matched. When interest points match, a geometric registration of the matched area determines the transformation between the images thereby allowing to determine the mapping between these two images, including translation, scaling and rotation values allowing to map image 420 to image 400. Using the other distinctive elements, other matches between interest points of other captured images are made, allowing to determine the complete set of transformations between the matching elements of the images. These transformations allow to build the global image depicted in the Figure 4A.

Figure 4B illustrates the set of transformation between matching elements of the images. The transformation 481 corresponds to the transformation values between the captured image 400 and the captured image 420. The distance between the centers of the images can be computed by taking the inverse transformation, and then taking into account the distance between the respective centers and matching area by applying the appropriate translation.

Figure 4C shows the result of the complete registration algorithm highlighting the localizations detected for the center of the captured images of the participating devices. The reference is preferably chosen to be the master device 201, the origin point (0,0) being the center of the image captured by this device and the y-axis orientation corresponding to the individual angle measurement Ω0 to the north performed by this device. The offsets for the center of each captured image of the other devices are determined, corresponding to the coordinates (x1, y1), (x2, y2) and (x3, y3) respectively of the captured images 410, 420 and 430, and thus determining the corresponding localization of each device, respectively P1, P2 and P3 for devices 211, 221 and 231. Figure 4C illustrates the complete matching of all images, showing the localizations detected for the center of the capture image of the participating devices.

The present disclosure requires the ceiling to comprise some distinctive elements, such as lighting equipment, safety equipment, structural elements or decorations. In the case where the ceiling is very uniform and there is no distinctive element located over the table, then the participants may hold a large element very high over the table and perform a LOC_INIT request. A large scarf, a mop, a poster or even stickers or markers glued on the ceiling could be used, as long as each device sees the distinctive elements and the captured images overlap.

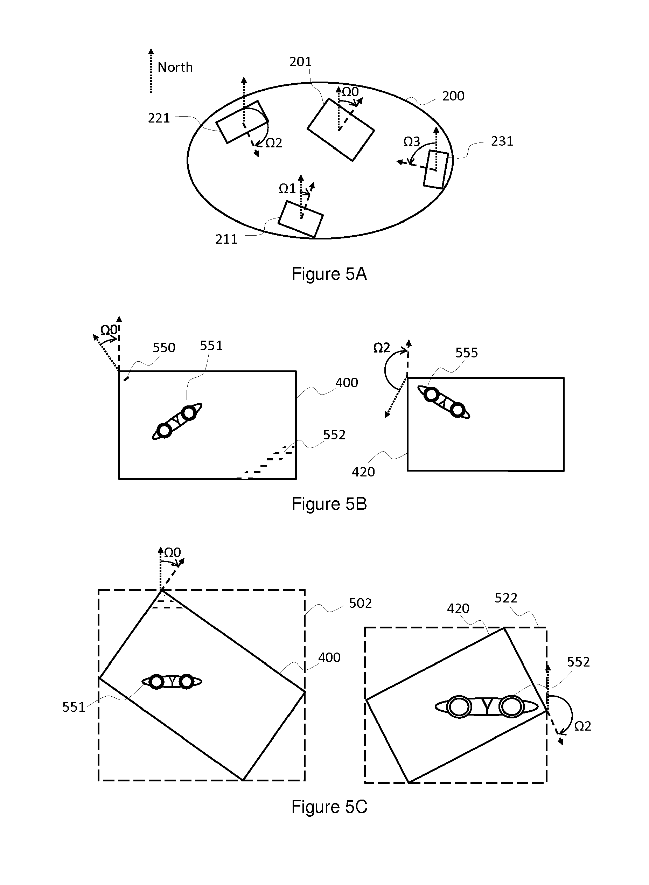

According to a preferred embodiment, the images captured by the devices are rotated so that the columns of pixels correspond to the south-north direction with the first pixel of the column pointing to the north. The individual angle measurements Ω0 to Ω3 provided by the devices in answer to a LOC_INIT request are used for that purpose. Figure 5A shows an example of multi-device arrangement highlighting the angles of each device between the north direction and the vertical up direction from the center of each device, so respectively the angles Ω0 for device 201, Ω1 for device 211, Ω2 for device 221 and Ω3 for device 231. Figure 5B shows the images 400 and 420 respectively captured by the devices 201 and 221. Both images captured a lighting device positioned on the ceiling over the table 200. This lighting device appears as element 551 in the captured image 400 and as element 555 in the captured image 420. The wooden beams 550 and 552 captured in image 400 are not present in image 420. Figure 5C illustrates the result of the rotation performed on the captured images to facilitate the matching. The images are rotated so that the columns of pixels correspond to the south-north direction, the first pixel of the column pointing to the north. The amount of rotation is given by the individual angle measurement related to each image, so respectively the angles Ω0 for device 201, Ω1 for device 211, Ω2 for device 221 and Ω3 for device 231. These rotations result in image 502 for the captured image 400 and image 522 for the captured image 420. As a consequence, the matching of elements 550 and 552 is largely facilitated in the rotated images of figure 5C, in comparison to the figure 5B.

According to an alternative embodiment, the rotation of the image, so that the columns of pixels correspond to the south-north direction with the first pixel of the column pointing to the north, is performed directly by the slave device after the capture of the image. In this case, the transmission of the individual angle measurements is no more required. This alternative embodiment simplifies the process on the master device.

In addition to the rotation, the captured images are preferably normalized before being used. This operation is mandatory when the matching algorithms are not robust to scaling. For that purpose the metadata provided with the image is helpful. Indeed, they comprise data related to the captured image such as the image size but also data related to the device such as the sensor size, the focal length of the lens or even, in some cases, the distance focused subject. Thanks to these data, it is possible to scale the images in order to improve the performances of the matching algorithms. Indeed, in this case, the transformations described in Figure 4A and 4B are simple translations.

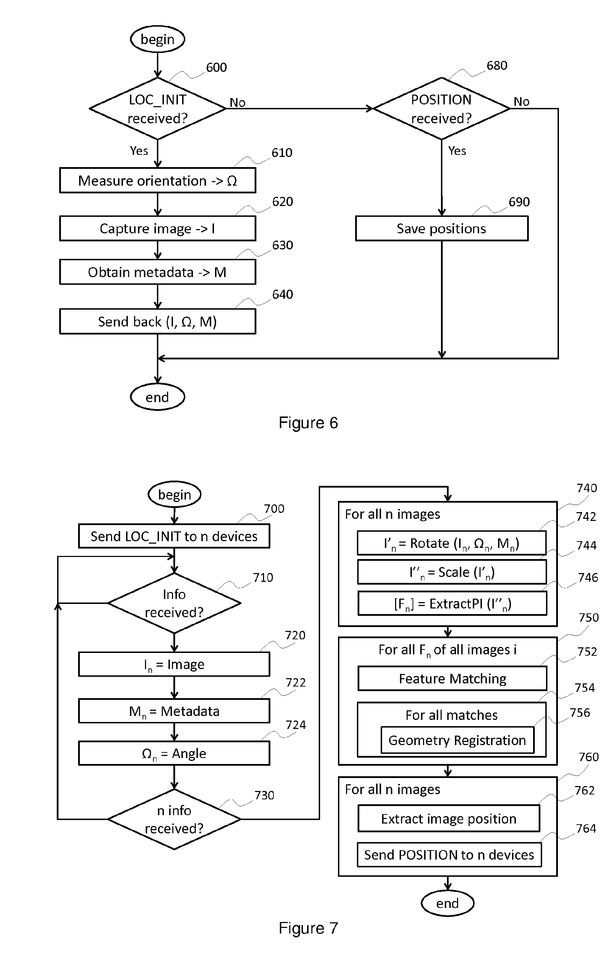

Figure 6 is a flowchart describing the behavior of a slave device participating in the localization process. The flowchart begins with the reception of a message by the slave device. The message is first analyzed, in step 600, to check if it corresponds to a LOC_INIT request. In this case, this triggers the measurements on the local device. In step 610, the device measures its orientation angle Ω towards the North pole using the integrated magnetometer. In step 620, the device captures an image I from the integrated camera and obtains, in step 630, the associated metadata M. The slave device will then send this information, in step 640, to the master device. When the received message is not a LOC_INIT request, it is checked, in step 680, if it is a POSITION message. In this case, the received positions are saved, for example in the memory, in order to be used by the application.

Figure 7 is a flowchart describing the behavior of the master device orchestrating the localization process. The device sends, in step 700, a LOC_INIT request to all the participating devices and waits, in step 710, for the information coming back from the devices. First it stores information received from the device *n*. In step 720, it receives the image using the camera associated with device *n* and stores it as image Iₙ. In step 722, it receives the metadata associated to both the image and the device. Examples of image metadata comprise the image size, the type of compression used, or also the color space. Examples of device metadata comprise the exposure time, the focal length, or also the sensor size. The metadata is stored as Mₙ. In step 724, it receives the orientation angle Ω towards the North pole that has been measured using the integrated magnetometer and stores it as Ωₙ. These steps are iterated until, in step 730, all participating devices have answered. Then, in step 740, for all *n* images, each image is rotated, in step 742, according to the angle Ωₙ, each image is scaled, in step 744, to a determined size, for example up-scaled to the resolution of the biggest image received, and finally, in step 746, image descriptors or features are extracted, leading to a set of image descriptors associated with each image. In step 750, for each extracted feature of all images, the feature is matched, in step 752, to the other features and when a match is detected, in step 754, the geometry registration is performed in step 756. In step 760, for all *n* images, the center position is extracted and the positions of the devices are sent, in step 764, to the other devices.

The feature matching process, in step 752, may identify multiple matches between two images. This is the case when multiple distinctive elements are located in an overlapping area. In this case, the geometry registration delivers a transformation value for each match and those values need to be combined, for example by averaging them.

In an alternate embodiment, a rotation and scale invariant matching algorithm is used, permitting to omit the rotation, in step 742, and the scaling, in step 744.

In another embodiment, the image scaling is done to enforce homogeneous pixels sizes, i.e. a single pixels is covering the same physical area. This requires to take into account the sensor size and the lens used for the capture, in order to estimate the pixel size, helped by the fact that in the context of the disclosure, all pictures are using the same distance to focus since they are at the same distance from the ceiling.

In another embodiment, only the captured image is transmitted from the participating devices to the master device and neither the metadata nor the orientation are provided. This has for effect to simplify the behavior of the participating devices but the side effect is that the detection of the overlaps is much more difficult. A more complex algorithm needs to be used to that purpose, probably requiring more processing power on the master device.

In the general case, the master device is itself also a slave device and therefore implements both behaviors described in figure 6 and 7. In an alternative implementation, the master device is a standard computing device, without integrated camera and magnetometer. This device can be present in the proximity of the handheld devices or can be located remotely, for example as a service operating in the cloud. His function will be to run the algorithms but it does not need to be localized. This device could allow more complex image processing algorithms to be used thanks to increased processing power compared to handheld devices. In this case, one of the slave devices, for example the first one, is taken as the geometry reference point.

In another embodiment, the localization process is fully distributed. Each device starting the application will send out the captured image, metadata and orientation information. When receiving such information, each other participating device that already launched the application sends out his own captured image, metadata and orientation information. As a result, each device will receive information for each other device and is therefore able to run the necessary algorithms to determine the localization of the other devices, relatively to his own position. In this case, the LOC_INIT message can be omitted.

As will be appreciated by one skilled in the art, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized. Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method for localization of a set of second devices, the method comprising at a processor (110) of a first device (100):
- receiving at least a captured image (720) from each of the second devices;
- detecting (752) overlapping areas between the captured images received from the devices;
- determining (756), using detected overlapping areas, geometrical transformations between the captured images;
- determining (762), using determined geometrical transformations, the corresponding positions of the second devices; and
- sending (764) to at least one of the second devices its position.

2. A method for participating in localization of a set of devices, the method comprising at a processor (110) of a device to be localized (100):
- obtaining (610) a measure of the orientation of the device towards a magnetic north direction;
- capturing (620) an image of a scene facing a screen (130);
- sending (640) to the first device (100) the captured image, metadata related to at least one of the device and the image and orientation of the device towards a magnetic north direction.

3. The method according to claim 1 further comprising receiving (724) from the second devices their orientation towards a magnetic north direction.

4. The method according any of claims 2 or 3 further comprising rotating (742) the captured image according to the device orientation towards a magnetic north direction so that the columns of pixels of the captured image correspond to the south-north direction with the first pixel of the column located towards the north.

5. The method according to claim 1 or 3 further comprising receiving (722) from the second devices metadata related to at least one of the device and the image.

6. The method according any of claims 2 or 5 comprising scaling (744) the captured image so that the pixel dimensions correspond to a determined size.

7. A data processing device (100) for localization of a set of second devices, comprising:
- an interface (150) configured to:
- receive at least the captured image from the second devices (100); and
- - send to the second devices (100) their localization positions;
- a processor (110) configured to:
- send a localization request to at least a second device (100);
- receive at least the captured image from the second devices (100);
- detect overlapping areas between the captured images received from the devices;
- determine, using detected overlapping areas, geometrical transformations between the captured images;
- determine, using determined geometrical transformations, the corresponding positions of the second devices; and
- send to the second devices (100) their localization positions.

8. A data processing device (100) for participating in the localization of a set of devices, comprising:
- a camera (170) positioned on the same side as the screen (130) and configured to capture an image of the scene facing the screen;
- a magnetometer (160) configured to measure the orientation towards a magnetic north direction;
- a screen (130) configured to display application data to the user;
- an interface (150) configured to send the captured image to the first device;
and
- a processor (110) configured to:
- receive a localization request from a first device;
- capture an image of the scene facing the screen through the integrated camera
- send the captured image to the first device;

9. The device according to claim 7 wherein the interface (150) is further configured to receive from the second devices their orientation towards a magnetic north direction.

10. The device according any of claims 8 or 9 wherein the processor (110) is further configured to rotate the captured image according to its orientation towards a magnetic north direction so that the columns of pixels of the captured image correspond to the south-north direction with the first pixel of the column located towards the north.

11. The device according to claim 7 wherein the interface (150) is further configured to receive from the second devices metadata related to at least one of the device and the image.

12. The device according the claims 11 wherein the processor (110) is further configured to scale the captured image according to metadata related to at least one of the device and the image so that the pixel dimensions of captured images for the second devices are similar.

13. The device according any of claims 7 or 11 wherein the processor (110) is further configured to scale the captured image so that the pixel dimensions correspond to a determined size.

14. Computer program comprising program code instructions executable by a processor (110) for implementing the steps of a method according to at least one of claims 1 to 5.

15. Computer program product which is stored on a non-transitory computer readable medium (190) and comprises program code instructions executable by a processor (110) for implementing the steps of a method according to at least one of claims 1 to 5.
